(19) Europäisches Patentamt
European Patent Office
Office européen des brevets

(11) **EP 3 862 833 B1**

(12) **EUROPÄISCHE PATENTSCHRIFT**

(45) Veröffentlichungstag und Bekanntmachung des Hinweises auf die Patenterteilung:
**21.02.2024  Patentblatt 2024/08**

(21) Anmeldenummer: **21153803.8**

(22) Anmeldetag: **27.01.2021**

(51) Internationale Patentklassifikation (IPC):
**G05B 19/418** (2006.01)    **G05B 23/02** (2006.01)
**B29C 70/38** (2006.01)

(52) Gemeinsame Patentklassifikation (CPC):
**G05B 19/41875; B29C 70/54; G05B 23/0262;**
B29C 70/38; Y02P 90/02

(54) **VERFAHREN ZUM VERIFIZIEREN EINES QUALITÄTSSICHERUNGSSYSTEMS**

METHOD FOR VERIFYING A QUALITY ASSURANCE SYSTEM

PROCÉDÉ DE VÉRIFICATION D'UN SYSTÈME D'ASSURANCE DE QUALITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.02.2020  DE 102020103067**

(43) Veröffentlichungstag der Anmeldung:
**11.08.2021  Patentblatt 2021/32**

(73) Patentinhaber: **Deutsches Zentrum für Luft- und Raumfahrt e.V.**
**53227 Bonn-Oberkassel (DE)**

(72) Erfinder: **Meister, Sebastian**
**21680 Stade (DE)**

(74) Vertreter: **Gramm, Lins & Partner**
**Patent- und Rechtsanwälte PartGmbB**
**Freundallee 13a**
**30173 Hannover (DE)**

(56) Entgegenhaltungen:
**EP-A1- 3 432 266      EP-A1- 3 654 034**
**DE-A1-102013 104 545**

**Beschreibung**

Die Erfindung betrifft ein Verfahren zum Verifizieren eines automatisierten Qualitätssicherungssystems zum Erfassen einer qualitätsbezogenen Materialeigenschaft abgelegter Fasermaterialien eines Faserverbundwerkstoffes zur Herstellung eines Faserverbundbauteils.

Aufgrund der gewichtsspezifischen Festigkeit und Steifigkeit von Faserverbundbauteilen, die aus einem Faserverbundwerkstoff hergestellt werden, sind derartige Bauteile aus der Luft- und Raumfahrt sowie aus vielen weiteren Anwendungsgebieten, wie beispielsweise dem Automobilbereich, heutzutage kaum mehr wegzudenken. Bei der Herstellung eines Faserverbundbauteils wird dabei ein das Fasermaterial einbettendes Matrixmaterial meist unter Temperatur- und Druckbeaufschlagung ausgehärtet und bildet so nach dem Aushärten eine integrale Einheit mit dem Fasermaterial. Die Verstärkungsfasern des Fasermaterials werden hierdurch in ihre vorgegebene Richtung gezwungen und können die auftretenden Lasten in die vor-gegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie beispielsweise Bindermaterialien oder zusätzliche Funktionselemente, die in das Bauteil integriert werden sollen. Werden für die Herstellung trockene Fasermaterialien bereitgestellt, so wird während des Herstellungsprozesses das Matrixmaterial des Faserverbundwerkstoffes in das Fasermaterial durch einen Infusionsprozess infundiert, durch den das trockene Fasermaterial mit dem Matrixmaterial imprägniert wird. Dies geschieht in der Regel aufgrund einer Druckdifferenz zwischen dem Matrixmaterial und dem Fasermaterial, indem beispielsweise das Fasermaterial mittels einer Vakuumpumpe evakuiert wird. Im Gegensatz hierzu sind auch Faserverbundwerkstoffe bekannt, bei denen das Fasermaterial mit dem Matrixmaterial bereits vorimprägniert ist (sogenannte Prepregs).

Vor dem Aushärten des Matrixmaterials wird in der Regel das Fasermaterial in ein Formwerkzeug eingebracht, das mit seiner formgebenden Werkzeugoberfläche die spätere Bauteilform nachbildet. Dabei können sowohl trockene als auch vorimprägnierte Fasermaterialien in das Formwerkzeug abgelegt bzw. eingebracht werden. Zur Herstellung von großskaligen Strukturbauteilen, wie beispielsweise Flügelschalen von Verkehrsflugzeugen oder Rotorblätter von Windkraftanlagen, werden zur Optimierung des Ablegeverfahrens automatisierte Faserablegeprozesse verwendet, bei denen mithilfe einer Fertigungsanlage und mindestens einem Faserlegekopf ein dem Faserlegekopf zugeführtes quasiendloses Fasermaterial auf dem Werkzeug abgelegt wird. Bei der sogenannten Fiber Placement Technologie werden beispielsweise vorimprägnierte Fasermaterialien bahnweise auf dem Formwerkzeug mithilfe eines derartigen Faserlegekopfes abgelegt. Der Faserlegekopf ist dabei an einem Roboter angeordnet und kann gegenüber dem Formwerkzeug relativ verfahren bzw. bewegt werden. Hierdurch können die einzelnen Faserbahnen auf der Werkzeugoberfläche zuerst bahnweise und dann lagenweise abgelegt werden. Bei der Fiber Placement Technologie werden dabei gleichzeitig mehrere, meist 8, 16 oder 32 schmale Materialstreifen, sogenannte Tows, auf dem Werkzeug abgelegt. Im Gegensatz hierzu werden bei der Fiber Tape Laying Technologie meist breite Faserbahnen, auch Tapes genannt (in der Regel 150 mm, 300 mm oder 600 mm breit mit einer Dicke von wenigen Zehntel Millimeter), mithilfe des Faserlegekopfes auf dem Formwerkzeug abgelegt.

Eine solche automatisierte Faserlegeanlage ist beispielsweise aus der DE 10 2010 015 027 B1 bekannt, bei der auf einem umlaufenden Schienensystem mehrere Roboter geführt werden, die jeweils einen Ablegekopf als Endeffektor haben. Mittels einer Faserzuführung werden den Ablegeköpfen kontinuierlich Fasermaterial aus einem Fasermagazin zugeführt, während die einzelnen Roboter mit ihren Ablege-köpfen das ihnen zugeführte Fasermaterial auf einem in der Mitte des umlaufenden Schienensystems vorgesehenen Formwerkzeug ablegen. Mithilfe der Faserlegeköpfe werden somit in dem Formwerkzeug sogenannte Faserlaminate, auch Faserpreformen genannt, hergestellt, bei denen der Prozess des Infundierens des Matrixmaterials bzw. des Aushärtens des Matrixmaterials noch nicht stattgefunden hat. Derartige Faserlaminate (auch Faserpreforms genannt) bilden somit das Bauteil in einem Rohzustand vor dem Aushärten des Matrixmaterials ab.

Faserlaminate bzw. Faserpreformen für großskaligen Strukturbauteilen, wie beispielsweise Flügel oder Rotorblätter, bestehen nicht selten aus vielen Einzellagen, die je nach Anwendungsgebiet des Bauteils auch mehr als 100 Lagen umfassen können. Zur Gewährleistung einer hohen Bauteilqualität muss die Anzahl auftretender Prozessfehler bei der Ablage des Fasermaterials minimiert bzw. gänzlich verhindert werden. Das Auftreten von Prozessfehlern bzw. Fertigungsabweichungen mit gro-ßem negativen Einfluss auf die Festigkeit der Bauteilstruktur muss nach Möglichkeit vollständig im Prozess erkannt und wünschenswerter Weise auch unterbunden werden.

In der Praxis hat sich hierfür oftmals die manuelle Inspektion der Faserlaminate bzw. der Einzellagen etabliert. Je nach Bauteilgröße, Mitarbeiterverfügbarkeit und Fehlerhäufigkeit innerhalb einer Einzellagen werden im Mittel etwa 15 bis 30 Minuten benötigt, die Ablage einer einzigen Faserlage zu untersuchen. Da jedoch die Ablage einer einzelnen Faserlage in der Regel deutlich schneller mithilfe automatisierter Faserlegeanlagen durchgeführt werden kann, wird durch die manuelle Inspektion die Anlageneffizienz deutlich herabgesetzt. So werden bei der Herstellung von Flügelschalen für Kurzstreckenflugzeuge bis zu 400 Einzellagen benötigt, woraus sich aufgrund der manuellen Inspektion ein Anlagenstillstand von 6000 bis 12.000 Minuten pro Bauteil ergibt.

Ebenso ist die Inspektion durch einen geschulten Mitarbeiter stark vom Erfahrungsgrad abhängig und darüber hinaus nicht in dem Maße qualitativ ausreichend, wie es die Fertigungstoleranzen eigentlich erfordern. Als Beispiel ist ein zulässiger Abstand zwischen 2 Materialbahnen von 1 mm genannt, der qualitativ nur unter Verwendung von Hilfsmitteln und dies auch nur stichpunktartig untersucht werden kann.

Aus diesen Gründen ist eine automatisierte Untersuchung abgelegter Faserlagen zur Erkennung von Ablegefehlern wünschenswert, um sowohl qualitativ als auch quantitativ das Erkennen von Oberflächenfehlern abgelegter Fasermaterialien zu verbessern.

Aus der EP 3 432 266 A1 ist ein Verfahren und eine Vorrichtung zum Erkennen von Fehlstellen von auf einem Werkzeug abgelegten Fasermaterialen bekannt, wobei zunächst mittels eines Laserlichtschnittsensors ein Höhenprofil ermittelt und potentielle Fehlerbereiche basierend auf dem Höhenprofil bestimmt werden. Die potentiellen Fehlerbereiche werden anschließend durch eine detaillierte Mustererkennungsanalyse untersucht.

Aus der EP 3 654 034 A1 ist ein Verfahren zum Kalibrieren sowie ein Verfahren und eine Vorrichtung zur Vermessung einer Sensoranordnung bekannt, wobei hierfür ein Kalibrierkörper bereitgestellt wird, der Merkmale zweier verschiedener Merkmalsarten aufweist.

Aus der DE 10 2013 104 546 A1 ist ein Verfahren zum Erkennen von Fehlstellen von auf einer Werkzeugoberfläche abgelegten Faserhalbzeugen bekannt, wobei mithilfe eines Lichtprojektionsverfahrens, bei dem die Oberfläche mit Licht einer Lichtquelle aus einer ersten Richtung beleuchtet und das von der Oberfläche reflektierte Licht aus einer anderen, zweiten Richtung mit einer Kamera aufgenommen wird, ein Höhenprofil der Fasermaterialoberfläche in Abhängigkeit von den aufgenommenen Bilddaten der Kamera erzeugt wird. Anhand dieses Höhenprofils können nun Fehlstellen durch eine Bildauswertung in der Fasermaterialoberfläche erkannt werden.

Aus der DE 10 2013 112 260 A1 ist ebenfalls ein Verfahren zum Erkennen von Fehlstellen mithilfe eines Lichtprojektionsverfahrens bekannt, wobei hierbei die Fasermaterialoberfläche zusätzlich zu dem Licht der Lichtquelle des Lichtprojektionsverfahrens mittels einer Beleuchtungseinheit beleuchtet wird und anschließend zusätzlich zu dem Höhenprofil die Fehlstellen auch in Abhängigkeit einer Intensitätsverteilung des reflektierten Lichtes der Beleuchtungseinheit ermittelt werden.

Weiterhin ist aus der DE 10 2013 104 545 A1 ein Verfahren zum Erkennen von Fehlstellen mithilfe eines Lichtprojektionsverfahrens bekannt, wobei hierbei zusätzlich zu der Ermittlung des Höhenprofils die Werkzeugoberfläche oder die abgelegten Fasermaterialien temperiert und anschließend mit einer Thermokamera aufgenommen werden. Basierend auf den Thermographiebildern der Thermographiekamera sowie dem zugrunde liegenden Höhenprofil aus dem Lichtprojektionsverfahren können nun Fehlstellen auf der Fasermaterialoberfläche erkannt werden.

Des Weiteren ist aus der nachveröffentlichten DE 10 2018 124 079.1 ein Verfahren und eine Vorrichtung zum Ermitteln von Fehlstellen von Fasermaterialien bekannt, bei dem die Fasermaterialoberfläche von vorimprägnierten Fasermaterialien durch mindestens einen Bildsensor einer bildgebenden Aufnahmenvorrichtung in einem Wellenlängenspektrum außerhalb des sichtbaren Spektrums aufgenommen wird. In Abhängigkeit von auf dieser Basis generierten digitalen Bilddaten werden nun Fehlstellen an dem abgelegten, vorimprägnierten Fasermaterialien erkannt.

Aus der nachveröffentlichten DE 10 2019 112 312.7 ist ein Verfahren zum dreidimensionalen Erfassen einer Fasermaterialoberfläche eines Fasermaterials eines Faserverbundwerkstoffes bekannt, bei dem die Fasermaterialoberfläche mit mindestens zwei polarisationssensitiven Aufnahmesensoriken aufgenommen und aus den resultierenden Messdaten dann dreidimensionale Oberflächendaten der Fasermaterialoberfläche erstellt werden. Hieraus ergibt sich dann beispielsweise ein digitales, dreidimensionales Oberflächenmodell der zu erfassenden Fasermaterialoberfläche.

Aus der nachveröffentlichten DE 10 2019 112 317.8 ist ein Verfahren zum Erkennen von geometrischen Oberflächenfehlern einer Fasermaterialoberfläche bekannt, bei dem die Fasermaterialoberfläche mit verschiedenen elektromagnetischen Strahlungen unterschiedlicher Polarisation bestrahlt wird. Mithilfe einer Auswerteeinheit können dann aus den polarisationsabhängigen Messdaten, die von der Fasermaterialoberfläche aufgenommen wurden, geometrische Oberflächenfehler erkannt werden. Durch die Variation der Polarisation der emittierten Strahlung und den verschiedenen Winkeln der Bestrahlung können die reflektierten Strahlungen bzw. Reflexionen von der Materialoberfläche eindeutig einer Strahlungsquelle zugeordnet werden, wodurch es möglich wird, geometrische Inhomogenitäten auf der Materialoberfläche prozesssicher erkennen zu können und darüber hinaus gegebenenfalls den Fehler auch zu charakterisieren.

Die oben beispielhaft beschriebenen Qualitätssicherungssysteme, mit denen sich qualitätsbezogene Materialeigenschaften von Fasermaterialien eines Faserverbundwerkstoffes bei der Herstellung eines Faserverbundbauteils ermitteln lassen, basieren grundsätzlich auf der Idee, die Fasermaterialoberfläche mithilfe eines optischen Sensors zu erfassen, aus den so erfassten Messdaten eine Mehrzahl von Messdatenmerkmalen in meist abstrakter Form zu ermitteln und anschließend basierend auf den so berechneten abstrakten Messdatenmerkmalen dann die qualitätsbezogene Materialeigenschaft zu ermitteln.

Bei derartigen Qualitätssicherungssystemen, mit denen sich die Ablagequalität von abgelegten Fasermaterialien insbesondere innerhalb eines Faserlegeprozesses während der Faserablage (sogenannte Inline Qualitätssicherung) bestimmen lässt, besteht das Bedürfnis, die Güte bzw. Genauigkeit des Qualitätssicherungssystems im Vorhinein abschätzen zu können. Für strukturkritische Bereiche besteht zudem die Anforderung eines Nachweises für die Funktionsfähigkeit des Qualitätssicherungssystems, damit auf eine manuelle Inspektion der hergestellten Faserlaminate verzichtet werden kann. Dabei ist der Nachweis der Funktionsfähigkeit zwischen dem realen Erscheinungsbild einer qualitätsbezogenen Materialeigenschaft (bspw. Prozessfehler) und der zur Analyse und Ermittlung notwendigen Abstraktion der Messdaten unerlässlich.

Es ist daher Aufgabe der vorliegenden Erfindung ein Verfahren zum Verifizieren eines automatisierten Qualitätssicherungssystems zum Erfassen einer qualitätsbezogenen Materialeigenschaft abgelegter Fasermaterialien eines Faserverbundwerkstoffes anzugeben, mit dem die Genauigkeit des Qualitätssicherungssystems ermittelt und/oder die Funktionsfähigkeit des Qualitätssicherungssystems vor dem Hintergrund der gestellten Genauigkeitsanforderungen überprüft werden kann.

Die Aufgabe wird mit dem Verfahren zum Verifizieren eines automatisierten Qualitätssicherungssystems gemäß Anspruch 1 erfindungsgemäß gelöst. Vorteilhafte Ausgestaltungen der Erfindung finden sich in den entsprechenden Unteransprüchen.

Gemäß Anspruch 1 wird ein Verfahren zum Verifizieren eines automatisierten Qualitätssicherungssystems zum Erfassen wenigstens einer qualitätsbezogenen Materialeigenschaft abgelegter Fasermaterialien eines Faserverbundwerkstoffes zur Herstellung eines Faserverbundbauteils vorgeschlagen, wobei das zu verifizierende Qualitätssicherungssystem eingerichtet ist, Messdaten einer Fasermaterialoberfläche des abgelegten Fasermaterials mittels zumindest eines Sensors einer ersten Aufnahmesensorik zu erfassen, aus den Messdaten eine Mehrzahl von Messdatenmerkmalen mittels einer Ermittlungseinheit zu ermitteln und aus den Messdatenmerkmalen mittels einer Auswerteeinheit die wenigstens eine qualitätsbezogene Materialeigenschaft zu ermitteln.

Bei dem Qualitätssicherungssystem kann es sich um eine Vorrichtung handeln, wie sie einleitend bereits beschrieben wurden. Grundsätzlich handelt es sich bei einem gattungsgemäßen Qualitätssicherungssystem im Sinne der vorliegenden Erfindung um eine Vorrichtung, mit der festgelegte Fertigungsanforderungen bei der automatisierten Faserablage von Fasermaterial auf ein Werkzeug mittels einer Faserlegeanlage automatisiert, d. h. maschinell, überprüft und sichergestellt werden können. Die dabei ermittelte qualitätsbezogene Materialeigenschaft definiert eine Güte im Hinblick auf die festgelegte Fertigungsanforderung.

Erfindungsgemäß wird nun vorgeschlagen, dass zunächst eine Fasermaterialprobe mit einer bekannten qualitätsbezogenen Materialeigenschaft bereitgestellt wird. Mithilfe dieser Fasermaterialprobe wird nun das automatisierte Qualitätssicherungssystem verifiziert.

Hierzu wird zunächst eine erste Messreihe mit dem zu verifizierenden Qualitätssicherungssystem durchgeführt, um eine Mehrzahl von Messdatenmerkmalen aus den erfassten Messdaten zu erhalten. Bei den Messdatenmerkmalen handelt es sich um eine notwendige Abstraktion der Messdaten, auf deren Basis dann die qualitätsbezogene Materialeigenschaft ermittelt wird. In der Regel ist eine derartige Abstraktion nicht bidirektional, sodass sich aus den Messdatenmerkmalen die eigentlichen Messdaten nicht mehr rekonstruieren lassen. Beispielhaft für eine derartige Abstraktion von Messdaten ist die Berechnung von "Histogrammen of oriented gradients" als Messdatenmerkmale aus Bilddaten als Messdaten.

Des Weiteren wird eine zweite Messreihe durchgeführt, bei der eine zu dem zu verifizierenden Qualitätssicherungssystem verschiedene Erfassungsvorrichtung verwendet wird. Die zweite Messreihe mit der zusätzlichen Erfassungsvorrichtung wird dabei ebenfalls an der bereitgestellten Fasermaterialprobe durchgeführt. Dabei werden zusätzliche Messdaten ermittelt, die mit zumindest einem Sensor einer zu der ersten Aufnahmesensorik des zu verifizierenden Qualitätssicherungssystems verschiedenen zweiten Aufnahmesensorik der Erfassungsvorrichtung erfasst werden. Die Art bzw. Kategorie der ersten Messdaten können dabei grundsätzlich zu der Art bzw. Kategorie der zweiten Messdaten verschieden sein. Bei der zusätzlichen Erfassungsvorrichtung kann es sich ebenfalls um eine Vorrichtung handeln, wie sie einleitend bereits beschrieben wurden.

Des Weiteren wird erfindungsgemäß eine maschinell gelernte Korrelation eines maschinellen Lernsystems zwischen Messdatenmerkmalen gemäß dem zu verifizierenden Qualitätssicherungssystem einerseits und Messdaten gemäß der zusätzlichen Erfassungsvorrichtung andererseits bereitgestellt, wodurch die Abstraktion der Messdaten zu den Messdatenmerkmalen gemäß dem zu verifizierenden Qualitätssicherungssystems in Korrelation mit Messdaten einer hiervon verschiedenen Erfassungsvorrichtung gebracht wurden.

Schließlich kann nun das zu verifizierende Qualitätssicherungssystem in Abhängigkeit von der bereitgestellten Korrelation und den ermittelten Messdatenmerkmalen der ersten Messreihe und den ermittelten Messdaten der zweiten Messreihe mittels einer Verifikationseinheit verifiziert werden, indem beispielsweise überprüft wird, ob die Messdatenmerkmale der ersten Messreihe und die Messdaten der zweiten Messreihe eine gleiche oder ähnliche Korrelation aufweisen, wie sie durch die Korrelation des maschinellen Lernsystems bereitgestellt wurde.

Hierdurch wird es möglich, ein solches Qualitätssicherungssystem zu verifizieren, indem komplexe und nicht direkt erkennbare Abhängigkeiten von einer oder mehreren Einflussgrößen genutzt werden. So kann beispielsweise die bereitgestellte Korrelation eine durch ein maschinelles Lernverfahren approximierte Funktion darstellen, welche eine Annäherung an die formulierte Entscheidungsgrundlage abbildet. Diese kann sowohl eine mathematisch beschreibbare Funktion sein, aber auch jedes abweichende Entscheidungsmuster. Dieses Entscheidungsmuster dient anschließend als Grundlage für das Erkennen und Darstellen von Korrelationen.

Mithilfe der vorliegenden Erfindung gelingt somit der Rückschluss bzw. der Nachweis einer korrekten Abstraktion zwischen den Eingangs-Messdaten des zu verifizierenden Qualitätssicherungssystems und den daraus berechneten Messdatenmerkmalen. Es wurde dabei erkannt, dass Korrelationen zwischen diesen Messdatenmerkmalen eines zu verifizierenden Qualitätssicherungssystems einerseits und Messdaten von hierzu verschiedenen Erfassungsvorrichtung bestehen, die maschinell gelernt und zur Verifikation eines Qualitätssicherungssystems genutzt werden können.

Bei den Messdaten der zweiten Messreihe kann es sich um Messdaten handeln, wie sie von dem verwendeten Sensor der zweiten Aufnahmesensorik generiert werden (sogenannte Rohdaten bzw. "raw data"). Bei den Messdaten der zweiten Messreihe kann es sich aber auch um davon abgeleitete Daten bzw. Informationen/Eigenschaften der aufgenommenen Fasermaterialoberfläche der Fasermaterialprobe handeln. Gemäß einer Ausführungsform ist vorgesehen, dass mit dem zu verifizierenden Qualitätssicherungssystem an der bereitgestellten Fasermaterialprobe mittels zumindest eines optischen Sensors der ersten Aufnahmesensorik Bilddaten der Fasermaterialoberfläche als Messdaten erfasst werden, wobei mittels der Ermittlungseinheit des zu verifizierenden Qualitätssicherungssystem eine Mehrzahl von Bildmerkmalen als Messdatenmerkmale aus den Bilddaten der Fasermaterialoberfläche ermittelt werden. Die bereitgestellte Korrelation enthält dabei entsprechend die Korrelation zwischen Bildmerkmalen als Messdatenmerkmale und den Messdaten erfasst in der zweiten Messreihe.

Bei dem optischen Sensor der ersten Aufnahmesensorik kann es sich beispielsweise um eine Kamera handeln, die Bilddaten generiert. Ein solcher optischer Sensor kann beispielsweise Licht im sichtbaren Spektralbereich erfassen. Ein solcher optischer Sensor kann aber auch elektromagnetische Wellen bzw. Strahlung im Infrarotbereich und/oder im Ultraviolettbereich erfassen. Auch Polarisationskameras sind denkbar.

Gemäß einer Ausführungsform ist vorgesehen, dass die Bilddaten der Fasermaterialoberfläche in eine Mehrzahl von Teilbereichen unterteilt werden, wobei für jeden Teilbereich aus den Bilddaten, die den jeweiligen Teilbereich betreffen, zumindest ein Bildmerkmal als Messdatenmerkmal ermittelt wird. Mit anderen Worten, die erfasste Fasermaterialoberfläche wird in eine Vielzahl von einzelnen, zweidimensionalen Teilbereichen unterteilt, die beispielsweise quadratisch sein können. Aus den in jedem zweidimensionalen Teilbereich erfassten Bilddaten, die genau in diesem Teilbereich liegen, wird dann zumindest ein Bildmerkmal als Messdatenmerkmal für diesen Teilbereich ermittelt, sodass anschließend für jeden Teilbereich zumindest ein Bildmerkmal als Messdatenmerkmal vorliegt.

Die Messdaten der zweiten Messreihe werden dabei vorzugsweise analog in die entsprechenden Teilbereiche unterteilt, wobei dann die Verifikation des Qualitätssicherungssystems derart erfolgt, dass Bildmerkmale eines Teilbereiches der ersten Messreihe mit den Messdaten (Rohdaten oder davon abgeleitete Daten/Informationen/Eigenschaften) des entsprechenden Teilbereiches der zweiten Messreihe mittels der maschinell gelernten Korrelation überprüft werden.

Gemäß einer Ausführungsform ist vorgesehen, dass als Bildmerkmal (Abstraktion von den Bilddaten der Messdaten zu den Bilddatenmerkmalen) ein histogram of oriented gradients (HOG) ermittelt wird.

Gemäß einer Ausführungsform ist vorgesehen, dass mit der Erfassungsvorrichtung an der bereitgestellten Fasermaterialprobe spektrale Informationen, optische Reflexionsinformationen, optische Streuungsinformationen, optische Brechungsinformationen und/oder optische Polarisationsinformationen der Fasermaterialoberfläche als Messdaten erfasst werden. In der einfachsten Ausführungsform werden mithilfe der zusätzlichen Erfassungsvorrichtung lediglich optischen Daten bzw. optische Bilddaten erfasst.

Gemäß einer Ausführungsform ist vorgesehen, dass eine maschinell gelernte Korrelation eines maschinellen Lernsystems bereitgestellt wird, bei dem die Korrelation zumindest teilweise mittels eines künstlichen neuronalen Netzes abgebildet oder gelernt wurde.

Gemäß einer Ausführungsform ist vorgesehen, dass an dem Fasermaterial Stufen, Überlappungen, Spalten, Verwerfungen, Welligkeiten, Lufteinschlüsse, Fremdkörper, Materialablösungen, Materialansammlungen, Materialfehler, Fehler auf Laminatebene und/oder chemische Defekte als qualitätsbezogene Materialeigenschaften mittels des zu verifizierenden Qualitätssicherungssystems ermittelbar sind.

Die Erfindung wird anhand der beigefügten Figuren beispielhaft näher erläutert. Es zeigen:

Figur 1    schematische Aufbau einer Faserlegeanlage mit einem Qualitätssicherungssystem;

Figur 2    Darstellung einer Prozesskette des Qualitätssicherungssystems;

Figur 3    Darstellung einer Merkmalsberechnung bei optischen Messdaten;

Figur 4    schematischer Aufbau einer Erfassungsvorrichtung zur Verifikation;

Figur 5    beispielhafte Darstellung einer Korrelationsfunktion.

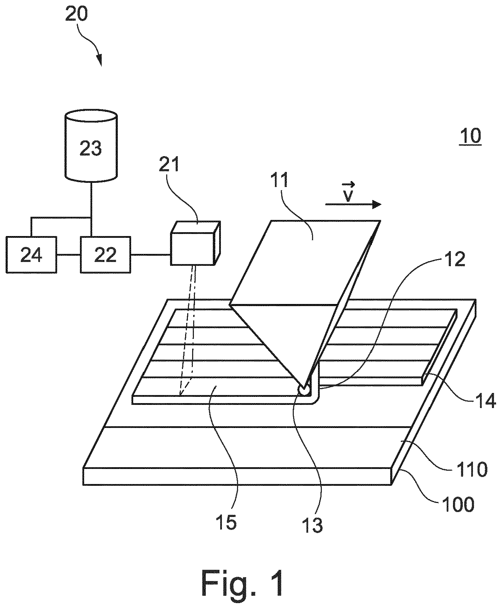

Figur 1 zeigt in einer schematisch stark vereinfachten Darstellung eine Faserlegeanlage 10, die einen Faserlegekopf 11 als Endeffektor eines nicht dargestellten Roboters hat. Dem Faserlegekopf 11 der Faserlegeanlage 10 wird dabei kontinuierlich ein bandförmige, quasiendloses Fasermaterial 12 zugeführt, dass mittels einer Kompaktierungsrolle 13 das dem Faserlegekopf 11 zugeführte Fasermaterial 12 auf eine formgebende Werkzeugoberfläche 110 eines Formwerkzeuges 100 ablegt.

Wie schematisch angedeutet, wird das Fasermaterial 12 nebeneinander und gegebenenfalls dann auch lagenweise übereinander abgelegt, um so die Faserpreform bzw. das Faserlaminat in dem Formwerkzeug 100 herzustellen.

Im Nachlauf des Faserlegekopfes 11 ist nun mindestens ein optischer Sensor 21 eines Qualitätssicherungssystems 20 angeordnet, der in Richtung der abgelegten Fasermaterialienoberfläche 15 des abgelegten Fasermaterials 14 ausgerichtet ist. Der optische Sensor 21 ist dabei so ausgebildet, dass er von der Fasermaterialoberfläche reflektierte elektromagnetische Strahlung (bspw. Licht im sichtbaren Spektralbereich) aufnimmt und daraus Messdaten generiert.

Da der optische Sensor 21 fest an dem Faserlegekopf 11 angeordnet ist, wird beim Ablegen des Fasermaterials 12 durch Bewegen des Faserlegekopfes 11 auch der optische Sensor 21 gegenüber der Fasermaterialoberfläche 15 des bereits abgelegten Fasermaterials 14 verfahren. Dadurch können an einer Vielzahl von Oberflächenpositionen jeweils optische Messdaten durch den optischen Sensor 21 generiert werden.

Die von dem optischen Sensor 21 generierten Messdaten werden dann an eine Ermittlungseinheit 22 übertragen, die eingerichtet ist, aus den generierten Messdaten des optischen Sensors 21 optische Messdatenmerkmale zu ermitteln. Solche optischen Messdatenmerkmale stellen dabei eine Merkmalsabstraktion der in den optischen Messdaten enthaltenen Informationen dar.

Diese optischen Messdatenmerkmale können dann beispielsweise in einem digitalen Datenspeicher 23 hinterlegt werden.

Des Weiteren weist das Qualitätssicherungssystem 20 eine Auswerteeinheit 24 auf, die eingerichtet ist, basierend auf den ermittelten optischen Messdatenmerkmalen der Ermittlungseinheit 22 mindestens einem qualitätsbezogene Materialeigenschaft der Fasermaterialoberfläche zu ermitteln.

Damit bildet der optische Sensor 21, die Ermittlungseinheit 22 sowie die Auswerteeinheit 24 des Qualitätssicherungssystems 20 die Prozesskette zur Ermittlung einer qualitätsbezogenen Materialeigenschaft der Fasermaterialoberfläche ab.

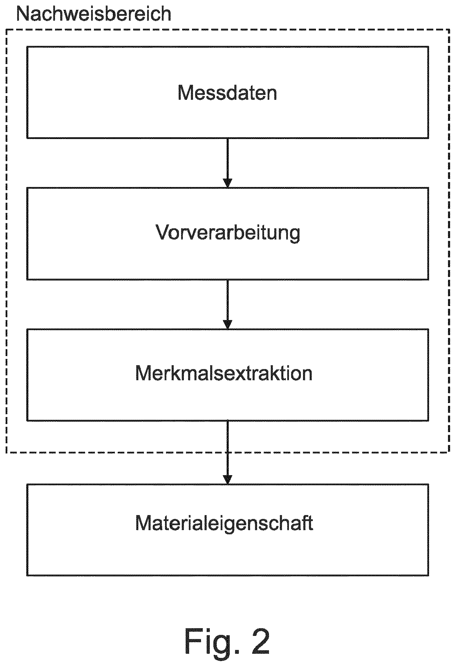

Diese Prozesskette ist schematisch in Figur 2 gezeigt. Aus den Messdaten werden mithilfe eines Pre-Processings (Vorverarbeitung) die Eingangsdaten für die Merkmalsextraktion generiert, mit deren Hilfe dann die Messdatenmerkmale (beispielsweise HOG) ermittelt werden. Basierend auf diesen Messdatenmerkmalen wird dann die qualitätsbezogene Materialeigenschaft ermittelt.

Die Verifikation des Qualitätssicherungssystems, wie es in Figur 1 beispielhaft gezeigt ist, bezieht sich dabei im Sinne der vorliegenden Erfindung auf den Nachweisbereich, wie in Figur 2 gezeigt ist. Demnach soll mithilfe der vorliegenden Erfindung die Prozesskette von den Messdaten über die vor Verarbeitung bis hin zu der Merkmalsextraktion verifiziert werden.

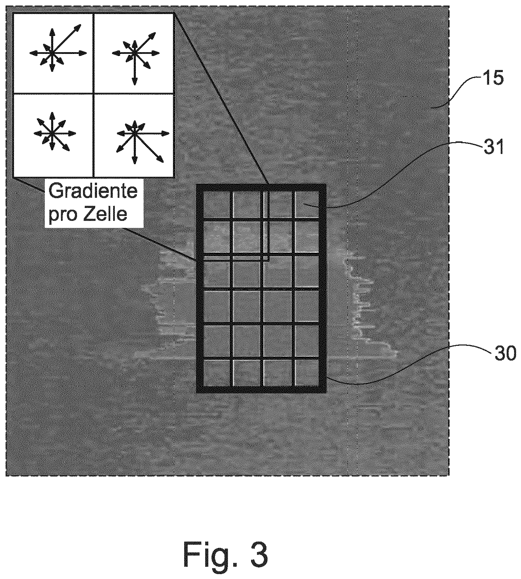

Figur 3 zeigt beispielhaft aufgenommenen Bilddaten einer Kamera als optischen Sensor, wobei die Bilddaten eine Fasermaterialoberfläche 15 eines Fasermaterials zeigen. Auf der Fasermaterialoberfläche 15 ist ein Bereich 30 erkennbar, der einen Legefehler beim Ablegen des Fasermaterials als qualitätsbezogene Materialeigenschaft enthält.

Bei der Merkmalsextraktion werden nun beispielsweise über das in Figur 3 schematische dargestellte Verfahren "Histogram of oriented gradients (HOG)" die abstrakten Merkmale berechnet. Hierfür wird der Bereich 30 in eine Mehrzahl von einzelnen Teilbereiche 31 unterteilt, wobei für jeden Teilbereich 31 dann ein "Histogram of oriented gradients (HOG)" berechnet wird.

Die Länge der dargestellten HOG-Vektoren kann dann beispielsweise anschließend für jedes Winkel-Intervall in einem einzelnen Vektor abgebildet werden. Dieser einzelne Beschreibung Vektor kann beispielsweise wie folgt aufgebaut sein:

$$x_c = (\, (h_1, \ldots, h_8)_{11}, \ldots, (h_1, \ldots, h_8)_{ij}\,)$$

Diese HOG-Vektoren der einzelnen Teilbereiche 31 bilden dabei die Messdatenmerkmale, die mithilfe der vorliegenden Erfindung als Grundlage für die Verifikation des Qualitätssicherungssystems dienen.

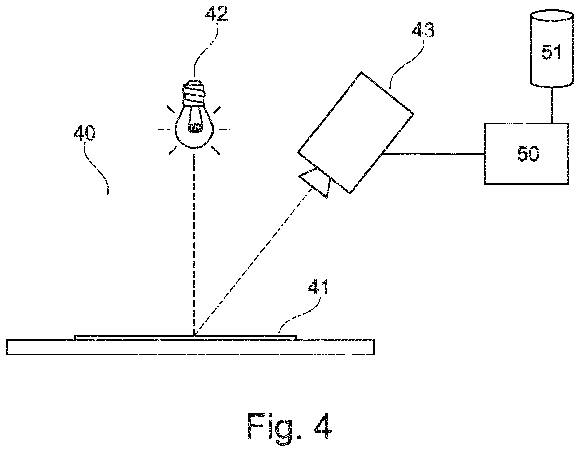

Figur 4 zeigt einen schematischen Aufbau einer zusätzlichen Erfassungsvorrichtung 40 einschließlich einer Verifikationseinheit 50, um innerhalb des in der Figur 2 gezeigt Nachweisbereiches das Qualitätssicherungssystem zu verifizieren.

Hierzu wird eine Fasermaterialprobe 41 bereitgestellt, die mithilfe der Erfassungsvorrichtung 40 untersucht wird. Die Fasermaterialprobe 41 hat dabei eine bekannte qualitätsbezogene Materialeigenschaft, beispielsweise einen Falten-Legefehler, wir in der Figur 3 schematische gezeigt ist. Diese Fasermaterialprobe 41 wird nun mithilfe einer Beleuchtungseinheit 42 beleuchtet, wobei die von der Fasermaterialprobe 41 reflektierten elektromagnetischen Wellen durch einen optischen Sensor 43 der Erfassungsvorrichtung 40 aufgenommen werden. Hieraus können beispielsweise spektrale Informationen, Reflexionseffekte, Streuungseffekte, Berechnungseffekte und Polarisationseffekte durch die Messdaten aufgenommen werden.

Die durch die Erfassungsvorrichtung 40 aufgenommenen Messdaten werden dann an eine Verifikationseinheit 50 übertragen, die aus einer vorherigen Messreihe bereits Messdatenmerkmale hat, die aus einer Analyse der Fasermaterialprobe 41 mit dem zu verifizierenden Qualitätssicherungssystems stammen. Über einen digitalen Datenspeicher 51 wird der Verifikationseinheit 50 darüber hinaus eine maschinell gelernte Korrelation zwischen Messdatenmerkmalen gemäß dem zu verifizierenden Qualitätssicherungssystem und Messdaten gemäß der Erfassungsvorrichtung 40 bereitgestellt.

Basierend auf dieser bereitgestellten Korrelation kann die Verifikationseinheit nun innerhalb des Nachweisbereiches anhand der in der ersten Messreihe ermittelten Messdatenmerkmale des zu verifizierenden Qualitätssicherungssystems und den Messdaten der zusätzlichen Erfassungsvorrichtung 40 das Qualitätssicherungssystem verifizieren. Hierbei wird überprüft, ob die Messdatenmerkmale und die Messdaten der bereitgestellten Korrelation entsprechend.

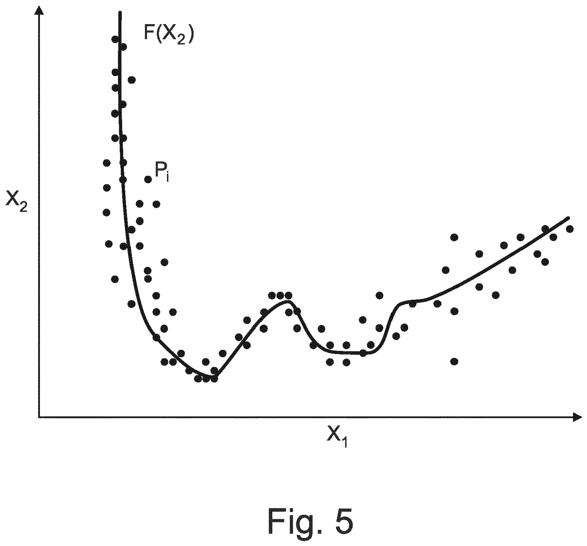

Figur 5 zeigt exemplarisch eine Korrelationsfunktion am Beispiel des zweidimensionalen Anwendungsfalls. Die hier skizzierte Funktion $F(x_2)$ kann eine komplexe mathematische zusammengesetzte Funktion sein, aber auch ein nahezu beliebiges anderes Entscheidungsmuster. $P_i$ stellt einzelne Messdaten setze dar. Ziel ist es, die Korrelation von optischen Messdaten der Erfassungsvorrichtung und dem abstrakten Merkmalsdaten (beispielsweise HOG-Vektoren) zu bestimmen.

Um diese Verknüpfung zu ermitteln, kann beispielsweise ein Ansatz des Deep Learnings verwendet werden. Konkret kann hierzu eine Kanonische Korrelationsanalyse unter Verwendung von künstlichen neuronalen Netzen genutzt werden. Der Vorteil dieses Vorgehens ist, dass Korrelationen zwischen 2 kompletten Datensätzen mit vielen variablen ermittelt werden können.

Es werden beispielsweise die Datensätze X und Y betrachtet. Es werden nun zwei Betrachtungsfunktionen $F_x = uX$ und $F_y = vY$ gebildet. Die Variablen u und v beschreiben hier Wichtungsvektoren für die einzelnen Datensätze. Anschließend müssen die Wichtungsvektoren dahingehend bestimmt werden, dass die Korrelation zwischen $F_x$ und $F_y$ maximal wird. Die Bestimmung dieser Wichtungsvektoren kann beispielsweise durch ein künstliches neuronales Netz erfolgen.

Diese Wichtungsvektoren u und v beschreiben die zuvor ermittelte Korrelation zwischen verschiedenen Datensätzen. Diese Vektoren werden somit herangezogen, um eine Abhängigkeit zwischen der vorgeschalteten optischen Materialcharakterisierung und den berechneten, abstrakten Bildmerkmalen herzustellen. Diese Vektoren können abschließend auch als Gütekriterium für den Nachweis der korrekten Funktionsfähigkeit eines Qualitätssicherungssystems verwendet werden.

Bezugszeichenliste

| 10 | Faserlegeanlage |
| 11 | Faserlegekopf |
| 12 | Fasermaterial |
| 13 | Kompaktierungsrolle |
| 14 | abgelegtes Fasermaterial |
| 15 | Fasermaterialoberfläche |
| 20 | Qualitätssicherungssystem |
| 21 | optischer Sensor |
| 22 | Ermittlungseinheit |
| 23 | digitaler Datenspeicher |
| 24 | Auswerteeinheit |
| 30 | Bereich |
| 31 | Teilbereich |
| 40 | (zusätzliche) Erfassungsvorrichtung |
| 41 | Fasermaterialprobe |
| 42 | Beleuchtungseinheit |
| 43 | Sensor |
| 50 | Verifikationseinheit |
| 51 | Datenspeicher |
| 100 | Formwerkzeug |
| 110 | formgebende Werkzeugoberfläche |

**Patentansprüche**

1. Verfahren zum Verifizieren eines automatisierten Qualitätssicherungssystems (20) zum Erfassen wenigstens einer qualitätsbezogenen Materialeigenschaft abgelegter Fasermaterialien (14) eines Faserverbundwerkstoffes zur Herstellung eines Faserverbundbauteils, wobei das zu verifizierende Qualitätssicherungssystem (20) Messdaten einer Fasermaterialoberfläche (15) des abgelegten Fasermaterials (14) mittels zumindest eines Sensors (43) einer ersten Aufnahmesensorik erfassen, aus den Messdaten eine Mehrzahl von Messdatenmerkmalen mittels einer Ermittlungseinheit (22) ermitteln und aus den Messdatenmerkmalen mittels einer Auswerteeinheit (24) die wenigstens eine qualitätsbezogene Materialeigenschaft ermitteln kann, aufweisend die folgenden Schritte:

- Bereitstellen einer Fasermaterialprobe (41) mit einer bekannten qualitätsbezogenen Materialeigenschaft,
- Durchführen einer ersten Messreihe mit dem zu verifizierenden Qualitätssicherungssystem (20) an der bereitgestellten Fasermaterialprobe (41), um eine Mehrzahl von Messdatenmerkmalen aus den erfassten Messdaten zu erhalten, und Hinterlegen der Messdatenmerkmale in einem digitalen Datenspeicher (23),
- Durchführen einer zweiten Messreihe mit einer zu dem zu verifizierenden Qualitätssicherungssystem (20) verschiedenen Erfassungsvorrichtung (40) an der bereitgestellten Fasermaterialprobe (41), um eine Mehrzahl von zusätzlichen Messdaten mittels zumindest eines Sensors (43) einer zu der ersten Aufnahmesensorik verschiedenen zweiten Aufnahmesensorik der Erfassungsvorrichtung (40) zu erhalten, und Hinterlegen der zusätzlichen Messdaten in dem digitalen Datenspeicher (23),
- Bereitstellen einer maschinell gelernten Korrelation eines maschinellen Lernsystems zwischen Messdatenmerkmalen gemäß dem zu verifizierenden Qualitätssicherungssystem (20) und Messdaten gemäß der Erfassungsvorrichtung (40) mittels einer Verifikationseinheit (50), und
- Verifizieren des zu verifizierenden Qualitätssicherungssystems (20) in Abhängigkeit von der bereitgestellten Korrelation und den ermittelten Messdatenmerkmalen der ersten Messreihe und den ermittelten Messdaten der zweiten Messreihe mittels der Verifikationseinheit (50).

2. Verfahren nach Anspruch 1, **dadurch gekennzeichnet, dass** mit dem zu verifizierenden Qualitätssicherungssystem (20) an der bereitgestellten Fasermaterialprobe (41) mittels zumindest eines optischen Sensors (21) der ersten Aufnahmesensorik Bilddaten der Fasermaterialoberfläche (15) als Messdaten erfasst werden, wobei mittels der Ermittlungseinheit (22) des zu verifizierenden Qualitätssicherungssystem (20) eine Mehrzahl von Bildmerkmalen als Messdatenmerkmale aus den Bilddaten der Fasermaterialoberfläche (15) ermittelt werden.

3. Verfahren nach Anspruch 2, **dadurch gekennzeichnet, dass** die Bilddaten der Fasermaterialoberfläche (15) in eine Mehrzahl von Teilbereichen (31) unterteilt werden, wobei für jeden Teilbereich (31) aus den Bilddaten, die den jeweiligen Teilbereich (31) betreffen, zumindest ein Bildmerkmal als Messdatenmerkmal ermittelt wird.

4. Verfahren nach Anspruch 3, **dadurch gekennzeichnet, dass** als Bildmerkmal ein histogram of oriented gradients (HOG) ermittelt wird.

5. Verfahren nach einem der vorhergehenden Ansprüche, **dadurch gekennzeichnet, dass** mit der Erfassungsvorrichtung (40) an der bereitgestellten Fasermaterialprobe (41) spektrale Informationen, optische Reflexionsinformationen, optische Streuungsinformationen, optische Brechungsinformationen und/oder optische Polarisationsinformationen der Fasermaterialoberfläche (15) als Messdaten erfasst werden.

6. Verfahren nach einem der vorhergehenden Ansprüche, **dadurch gekennzeichnet, dass** eine maschinell gelernte Korrelation eines maschinellen Lernsystems bereitgestellt wird, bei dem die Korrelation zumindest teilweise mittels eines künstlichen neuronalen Netzes abgebildet oder gelernt wurde.

7. Verfahren nach einem der vorhergehenden Ansprüche, **dadurch gekennzeichnet, dass** an dem Fasermaterial (12) Stufen, Überlappungen, Spalten, Verwerfungen, Welligkeiten, Lufteinschlüsse, Fremdkörper, Materialablösungen, Materialansammlungen, Materialfehler, Fehler auf Laminatebene und/oder chemische Defekte als qualitätsbezogene Materialeigenschaften mittels des zu verifizierenden Qualitätssicherungssystems (20) ermittelbar sind.

## Claims

1. Method for verifying an automated quality control system (20) for detecting at least one quality-related material property of deposited fiber materials (14) of a fiber composite material for producing a fiber composite component, wherein the quality control system (20) to be verified detects measurement data of a fiber material surface (15) of the deposited fiber material (14) by means of at least one sensor (43) of a first recording sensor system, can determine a plurality of measurement data features from the measurement data by means of a determination unit (22) and can determine the at least one quality-related material property from the measurement data features by means of an evaluation unit (24), having the following steps:

   - Providing a fiber material sample (41) with a known quality-related material property,
   - Performing a first series of measurements with the quality control system (20) to be verified on the provided fiber material sample (41) in order to obtain a plurality of measurement data features from the acquired measurement data, and storing the measurement data features in a digital data memory (23),
   - Performing a second series of measurements on the provided fiber material sample (41) using a detection device (40) different from the quality control system (20) to be verified in order to obtain a plurality of additional measurement data by means of at least one sensor (43) of a second recording sensor system of the detection device (40) different from the first recording sensor system, and storing the additional measurement data in the digital data memory (23),
   - Providing a machine-learned correlation of a machine learning system between measurement data features according to the quality control system (20) to be verified and measurement data according to the detection device (40) by means of a verification unit (50), and
   - Verifying of the quality control system (20) to be verified as a function of the correlation provided and the determined measurement data features of the first measurement series and the determined measurement data of the second measurement series by means of the verification unit (50).

2. Method according to claim 1, **characterized in that** the quality control system (20) to be verified is used to record image data as measurement data of the fiber material surface (15) on the fiber material sample (41) provided by means of at least one optical sensor (21) of the first recording sensor system, a plurality of image features being determined as measurement data features from the image data of the fiber material surface (15) by means of the determination unit (22) of the quality control system (20) to be verified.

3. Method according to claim 2, **characterized in that** the image data of the fiber material surface (15) are subdivided into a plurality of subsections (31), at least one image feature being determined as a measurement data feature for each subsection (31) from the image data relating to the respective subsection (31).

4. Method according to claim 3, **characterized in that** a histogram of oriented gradients (HOG) is determined as an image feature.

5. Method according to one of the preceding claims, **characterized in that** spectral information, optical reflection information, optical scattering information, optical refraction information and/or optical polarization information of the fiber material surface (15) are recorded as measurement data on the provided fiber material sample (41) by means of the detection device (40).

6. Method according to one of the preceding claims, **characterized in that** a machine-learned correlation of a machine learning system is provided, in which the correlation has been at least partially mapped or learned by means of an artificial neural network.

7. Method according to one of the preceding claims, **characterized in that** steps, overlaps, gaps, distortions, waviness, air inclusions, foreign bodies, material detachments, material accumulations, material defects, defects at laminate level and/or chemical defects can be determined on the fiber material (12) as quality-related material properties by means of the quality control system (20) to be verified.

**Revendications**

1. Procédé de vérification d'un système d'assurance qualité automatisé (20) pour détecter au moins une propriété de matériau, relative à la qualité, de matériaux fibreux déposés (14) d'un matériau composite renforcé par des fibres pour la fabrication d'un élément composite renforcé par des fibres, dans lequel le système d'assurance qualité (20) à vérifier est conçu pour détecter des données de mesure d'une surface (15) du matériau fibreux déposé (14) au moyen d'au moins un capteur (43) d'un premier ensemble capteur d'enregistrement, déterminer à partir des données de mesure une pluralité de caractéristiques de données de mesure au moyen d'une unité de détermination (22), et déterminer à partir des caractéristiques de données de mesure ladite au moins une propriété de matériau relative à la qualité au moyen d'une unité d'évaluation (24), comprenant les étapes suivantes consistant à :

   - fournir un échantillon de matériau fibreux (41) ayant une propriété de matériau, relative à la qualité, connue,
   - réaliser une première série de mesures avec le système d'assurance qualité (20) à vérifier sur l'échantillon de matériau fibreux (41) fourni, afin d'obtenir une pluralité de caractéristiques de données de mesure à partir des données de mesure détectées, et stocker les caractéristiques de données de mesure dans une mémoire de données numérique (23),
   - réaliser une deuxième série de mesures avec un dispositif de détection (40), différent du système d'assurance qualité (20) à vérifier, sur l'échantillon de matériau fibreux (41) fourni, afin d'obtenir une pluralité de données de mesure supplémentaires au moyen d'au moins un capteur (43) d'un deuxième ensemble capteur d'enregistrement du dispositif de détection (40), différent du premier ensemble capteur d'enregistrement, et stocker les données de mesure supplémentaires dans la mémoire de données numérique (23),
   - fournir une corrélation, apprise automatiquement d'un système d'apprentissage automatique, entre des caractéristiques de données de mesure selon le système d'assurance qualité (20) à vérifier et des données de mesure selon le dispositif de détection (40), au moyen d'une unité de vérification (50), et
   - vérifier le système d'assurance qualité (20) à vérifier en fonction de la corrélation fournie et des caractéristiques de données de mesure déterminées de la première série de mesures et des données de mesure déterminées de la deuxième série de mesures, au moyen de l'unité de vérification (50).

**2.** Procédé selon la revendication 1, **caractérisé en ce que** le système d'assurance qualité (20) à vérifier permet de détecter comme données de mesure des données d'image de la surface de matériau fibreux (15) sur l'échantillon de matériau fibreux (41) fourni, au moyen d'au moins un capteur optique (21) du premier ensemble capteur d'enregistrement, et l'unité de détermination (22) du système d'assurance qualité (20) à vérifier permet de déterminer comme caractéristiques de données de mesure une pluralité de caractéristiques d'image à partir des données d'image de la surface de matériau fibreux (15).

**3.** Procédé selon la revendication 2, **caractérisé en ce que** les données d'image de la surface de matériau fibreux (15) sont divisées en une pluralité de zones partielles (31), au moins une caractéristique d'image étant déterminée comme caractéristique de données de mesure pour chaque zone partielle (31) à partir des données d'image qui concernent la zone partielle (31) correspondante.

**4.** Procédé selon la revendication 3, **caractérisé en ce qu'**un histogramme de gradient orienté (HOG) est déterminé comme caractéristique d'image.

**5.** Procédé selon l'une des revendications précédentes, **caractérisé en ce que** le dispositif de détection (40) permet de détecter comme données de mesure des informations spectrales, des informations de réflexion optique, des informations de diffusion optique, des informations de réfraction optique et/ou des informations de polarisation optique de la surface de matériau fibreux (15), sur l'échantillon de matériau fibreux (41) fourni.

**6.** Procédé selon l'une des revendications précédentes, **caractérisé en ce qu'**une corrélation apprise automatiquement d'un système d'apprentissage automatique est fournie, dans lequel la corrélation a été reproduite ou apprise au moins partiellement au moyen d'un réseau neuronal artificiel.

**7.** Procédé selon l'une des revendications précédentes, **caractérisé en ce que** le système d'assurance qualité (20) à vérifier permet de déterminer comme propriétés de matériau relatives à la qualité des gradins, des chevauchements, des fentes, des gauchissements, des ondulations, des inclusions d'air, des corps étrangers, des décollements de matériau, des accumulations de matériau, des défauts de matériau, des défauts au niveau du stratifié et/ou des défauts chimiques, sur le matériau fibreux (12).

Fig. 1

Nachweisbereich

```
┌ ─ ─ ─ ─ ─ ─ ─ ─ ─ ─ ─ ─ ─ ─ ─ ─ ─ ─ ─ ┐
│   ┌─────────────────────────────┐   │
│   │          Messdaten          │   │
│   └─────────────────────────────┘   │
│                 │                   │
│                 ▼                   │
│   ┌─────────────────────────────┐   │
│   │       Vorverarbeitung       │   │
│   └─────────────────────────────┘   │
│                 │                   │
│                 ▼                   │
│   ┌─────────────────────────────┐   │
│   │     Merkmalsextraktion      │   │
│   └─────────────────────────────┘   │
│                 │                   │
└ ─ ─ ─ ─ ─ ─ ─ ─ │ ─ ─ ─ ─ ─ ─ ─ ─ ─ ┘
                  ▼
    ┌─────────────────────────────┐
    │      Materialeigenschaft    │
    └─────────────────────────────┘
```

# Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010015027 B1
- EP 3432266 A1
- EP 3654034 A1
- DE 102013104546 A1
- DE 102013112260 A1
- DE 102013104545 A1
- DE 102018124079
- DE 102019112312
- DE 102019112317